# EUROPÄISCHE PATENTSCHRIFT

(11) **EP 2 170 654 B1**
(45) Veröffentlichungstag und Bekanntmachung des Hinweises auf die Patenterteilung: **21.05.2014**
(21) Anmeldenummer: 08758704.4
(22) Anmeldetag: 23.05.2008
(51) Int. Cl.: B60R 21/2165, B60R 21/207

(54) **AIRBAGMODULANORDNUNG**
AIRBAG MODULE ARRANGEMENT
AGENCEMENT DE MODULE D'AIRBAG

(30) Priorität: 29.06.2007 DE 102007030372
(43) Veröffentlichungstag der Anmeldung: 07.04.2010
(73) Patentinhaber: Volkswagen Aktiengesellschaft, 38440 Wolfsburg (DE)
(72) Erfinder: PAULY, Karl-Heinz, 38542 Leiferde (DE); ZOTHKE, Nils, 38165 Lehre (DE)
(86) Internationale Anmeldenummer: PCT/EP2008/004105
(87) Internationale Veröffentlichungsnummer: WO 2009/003558

(56) Entgegenhaltungen:
- EP-A1- 1 053 134
- EP-A2- 0 768 215
- DE-A1-102004 060 328
- DE-T2- 69 627 259
- DE-T2- 69 627 578
- DE-T2- 69 907 172
- US-A- 5 639 111
- US-A- 5 863 063

## Beschreibung

Die Erfindung betrifft die Anordnung eines Soft-Cover Seitenairbagmoduls an einer Fahrzeugkomponente, insbesondere einer Rückenlehne eines Fahrzeugsitzes mit den im Oberbegriff des Anspruchs 1 genannten Merkmalen.

Airbags im nicht aufgeblasenen Zustand müssen möglichst klein und sicher innerhalb der Fahrzeuginnenausstattung untergebracht werden, beispielsweise in Armaturenbrettern, Pralltöpfen oder in Seitenverkleidungen sowie Fahrzeugsitzen.

Heutige Fahrzeuge sind oft mit Seitenairbags ausgestattet, welche die Form eines seitlichen Luftschleiers, der in einem Fahrzeugdach angeordnet ist, haben können oder alternativ oder zusätzlich kann ein Airbag innerhalb einer Fahrzeugsitzanordnung angeordnet sein.

Ein Nachteil von Airbags, die sich innerhalb einer Sitzanordnung befinden, besteht darin, dass die Airbags durch das Sitzmaterial hindurchbrechen müssen, bevor sie sich vollständig entfalten können, um einen Fahrzeuginsassen zu schützen. Während der Entfaltung kann ein solcher Airbag auf Schaum oder andere Sitzpolster-Materialien treffen und muss dann durch Sitzbezug hindurchbrechen, um aus der Sitzanordnung austreten zu können. Hier besteht ein Problem darin ein unkontrolliertes "Durchschießen" des seitlichen Bereiches zu verhindern und die Entstehung von Einzelschaumpartikeln beim Airbagschuss zum Schutz der Insassen zu vermeiden.

Nachteilig ist, dass die zumeist angewendete Hard-Cover-Struktur des Airbagmoduls bei zum Beispiel seitlich in der Rückenlehne ausgeführtem, offenen Schaumbereich durch minimale Veränderungen des Schaumteiles beziehungsweise des Bezuges nach dem Einsitzen des Fahrzeugsitzes durch den Benutzer von außen sichtbare erhabene Polsterbereiche bildet.

Bekannt sind, neben den sogenannten Hard-Cover Airbagmodulen, aber auch sogenannte Soft-Cover-Airbagmodule. Die EP 0 768 215 A2 offenbart beispielsweise einen Airbag der in einem Sitzschaumteil angeordnet ist, wobei auf der Innenseite eine Vliesschicht vorgesehen ist. Die Vliesschicht ist dabei mit einer Perforation versehen um das austreten des Airbags bei Auslösung zu begünstigen.

Der Einbau in den dafür vorgesehenen Bauräumen ist schwierig, da die Aufgabe darin besteht, einen nur locker gefalteten Airbag unterzubringen und gleichzeitig eine sichere Entfaltung zu gewährleisten. Da die Faltung eines Airbags wichtig bezüglich der Art und Zuverlässigkeit sowie der Geschwindigkeit des Entfaltens ist, wird der zusammengefaltete Airbag durch Haltebänder oder ein sogenanntes Soft-Cover in der zusammengefalteten Position während des Transports und Einbaus gehalten, bis ein Aufblasen durch das Gas eines Gasgenerators erfolgt. Die Anordnung eines Soft-Cover-Airbagmoduls unter Vermeidung der genannten Nachteile und Überwindung der genannten Schwierigkeiten ist Gegenstand der vorliegenden Erfindung.

Der Erfindung liegt die Aufgabe zugrunde in einem Fahrzeugsitz ein Soft-Cover-Airbagmodul derart unterzubringen, dass sich während der Lebensdauer des Fahrzeugsitzes durch Veränderung des Sitzes von außen keine durch das Airbagmodul entstehenden sichtbaren Bereiche ausbilden und zudem eine zuverlässiges Entfalten und Austreten des Airbagluftsackes gewährleistet ist.

Die Erfindung wird in Verbindung mit den Merkmalen des Oberbegriffs des Patentanspruchs 1 dadurch gelöst, dass ein Bauraum des Airbagmoduls in einer Fahrzeugkomponente, insbesondere einer Rückenlehne von einem zumindest in Entfaltungsrichtung geschlossenen Schaumteil umgeben ist und zumindest im gewünschten Austrittsbereich des Airbagmoduls aus dem Schaumteil auf der Innenseite des Schaumteiles eine vliesartige Schicht angeordnet ist, die im gewünschten Austrittsbereichs des Airbagmoduls eine vorgebbare Perforierung aufweist.

Die Perforierung der vliesartigen Schicht ist dabei geschlitzt oder gelocht ausgestaltet. Die Schlitzung oder Lochung der vliesartigen Schicht erfolgt nach einem vorgebbaren Schlitz- oder Lochmuster. Durch die vliesartige Schicht ergibt sich der wesentliche Vorteil, dass die vliesartige Schicht den Schaum des Schaumteiles im Austrittsbereich des Luftsacks des Airbagmoduls unter Vermeidung der Entstehung von Einzelschaumpartikeln des Schaumes fest zusammenhält. Das Schlitz- oder Lochmuster wird so ausgebildet, das die Länge der geschlitzten oder gelochten Bereiche der vliesartigen Schicht bei in z-Richtung (vertikal) verlaufender Perforierung von oben nach unten zunimmt.

In bevorzugter Ausgestaltung der Erfindung handelt es sich bei dem Airbagmodul um ein Soft-Cover-Seitenairbagmodul, dessen Luftsack im Wesentlichen durch ein Halteband oder dergleichen an dem Airbagträger befestigt und in einem im Schaumteil vorgesehenen Bauraum vorgehalten ist.

In weiterer bevorzugter Ausgestaltung der Erfindung ist die Perforierung auf der Innenseite der vliesartigen Schicht zum Airbagmodul hingerichtet ausgeführt.

Bevorzugt wird die vliesartige Schicht beim Schäumen des Schaumteiles in einem Schaumteilwerkzeug an das Schaumteil bereits angeschäumt.

Innerhalb eines als Anwendungsbeispiel in Frage kommenden Fahrzeugsitzes ist die Perforierung der vliesartigen Schicht im Wesentlichen in z-Richtung im Wesentlichen orthogonal zu der Entfaltungsrichtung des Luftsackes des Airbagmoduls verlaufend ausgeführt.

Durch die Perforierung der vliesartigen Schicht wird ein gezieltes Aufreißen des Rückenlehnenschaumes im Falle eines Auslösens des Seitenairbags erreicht.

Ferner wird bevorzugt ein Schlitz- oder Lochmuster ausgebildet, bei dem die Abstände zwischen den geschlitzten oder gelochten Bereichen der vliesartigen Schicht bei in z-Richtung (vertikal) verlaufender Perforierung von oben nach unten abnehmen. In weiterer bevorzugter Ausgestaltung der Erfindung weist das Schaumteil auf der Innenseite zum Airbagmodul hin gerichtet ebenfalls eine Schlitzung oder Anschlitzung auf, wobei die Lage der Schlitzung oder Anschlitzung mit der Perforierung der vliesartigen Schicht abgestimmt ist beziehungsweise korrespondiert.

Zudem wird das Schaumteil in einer weiteren bevorzugten Ausgestaltung auf der Innenseite des Schaumteiles mit einer Schaumnut versehen, die ein definiertes Aufreißen des Schaumteiles beim Austritt des Luftsackes des Airbagmoduls in eine vorgebbare Richtung ermöglicht.

Die Schaumnut wird auf der Innenseite vorzugsweise in einer halbmondartigen Form in das Schaumteil eingebracht und in der vorgebbaren Richtung, je nach gewünschter Entfaltungsrichtung, ausgerichtet. Zum seitlichen Schutz eines Fahrzeuginsassen ist beispielsweise, um insbesondere den Hüftbereiches eines Insassen zu schützen, eine Entfaltungsrichtung schräg nach vorn zwischen den Richtungen x, y, gewünscht, wobei die Schaumnut ferner vorzugsweise schräg gegenüber eine gedachten y-Ebene verlaufend eingebracht ist. Um diese Entfaltungsrichtung zu ermöglichen wird die Schaumnut entsprechend dieser Vorgaben eingebracht, wie die Figuren zusätzlich verdeutlichen und das nachfolgende Ausführungsbeispiel noch näher beschreibt.

In bevorzugter Ausgestaltung der Erfindung weist ein das Schaumteil umgebender Bezug eine Schwächung auf, wobei die Lage der Schwächung mit der Perforierung der vliesartigen Schicht abgestimmt ist beziehungsweise korrespondiert.

Bevorzugt ist schließlich, dass die Perforierung im Wesentlichen in z-Richtung verlaufend im Übergangsbereich des Schaumteiles von einer im Wesentlichen in x-Richtung verlaufenden flächigen Innenkontur in die im Wesentlichen in y-Richtung verlaufende flächige Innenkontur des Schaumteiles ausgeführt ist, so dass sich eine Entfaltungsrichtung schräg nach vorn im Wesentlichen in x-Richtung zwischen den Richtungen x, y zum seitlichen Schutz des eines Fahrzeuginsassen ausbildet.

Die Erfindung wird nachfolgend anhand von Figuren an einem Ausführungsbeispiel näher erläutert. Die Erfindung ist auf das Ausführungsbeispiel nicht eingeschränkt. Es wird explizit darauf hingewiesen, dass ein Einsatz in jeglichen Bereichen eines Fahrzeugsitzes oder anderen Bereichen des Fahrzeuges beispielsweise in einem Armaturenbrett oder dergleichen möglich ist, auch wenn sich die nachfolgende Beschreibung nur auf ein Airbagmodulanordnung als Seiten-Airbagmodul in einer Rückenlehne bezieht.

Es zeigen:
- Figur 1: eine Seitenansicht einer ein Soft-Cover-Airbagmodul tragenden Tragstruktur am Beispiel einer Rückenlehne;
- Figur 2: eine Vorderaußenansicht der Rückenlehne mit seitlich angeordneter Airbagmodulanordnung;
- Figur 3A: eine perspektivische Hinteransicht in das eröffnete Schaumteil einer Rückenlehne mit herausgezogenem Soft-Cover-Airbagmodul;
- Figur 3B: die zugehörige Tragstruktur der Rückenlehne;
- Figur 4: eine schematische perspektivische Darstellung einer eröffneten Rückenlehne schräg von hinten mit Angabe einer Schnittlinie A-A durch das Schaumteil der Rückenlehne;
- Figur 5: eine perspektivische Darstellung einer geschlossenen Rückenlehne schräg von hinten mit Angabe der Schnittlinie A-A durch das Schaumteil der Rückenlehne;
- Figur 6A: Schnitt A-A nach Figur 4 oder 5 des Schaumteiles mit einer daran angeordneten vliesartigen Schicht;
- Figur 6B: eine vergrößerte Darstellung der Figur 6A des unteren Bereiches des Schnittes A-A nach Figur 4 oder 5 des Schaumteiles;
- Figur 7: eine schematische perspektivische Darstellung einer eröffneten Rückenlehne schräg von hinten mit Darstellung der Perforierung der vliesartigen Schicht;
- Figuren 8A, 8B: eine Darstellung einer eröffneten Rückenlehne schräg von hinten, in der die Anordnung einer Schaumnut auf der Innenseite des Schaumteiles sichtbar ist und
- Figuren 9A, 9B: einen Schnitt B-B nach den Figuren 8A und 8B durch das Schaumteil zur Darstellung der Lage und Form der Schaumnut im Schaumteil.

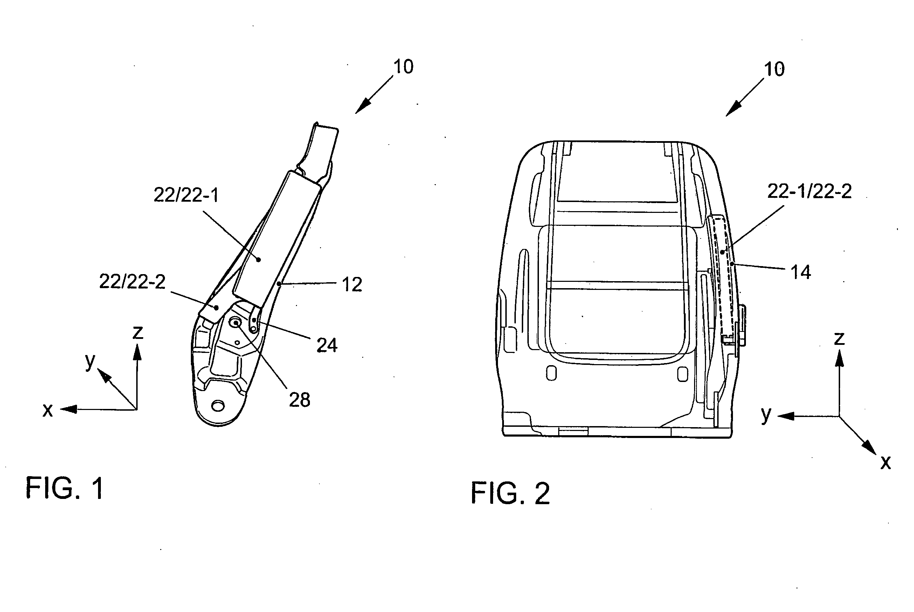

Figur 1 zeigt eine Seitenansicht einer ein Soft-Cover-Airbagmodul 22 tragenden Tragstruktur 12 am Beispiel einer Rückenlehne 10. Die Rückenlehne 10 ist die Fahrzeugkomponente anhand der die Erfindung näher erläutert werden soll.

Die Figur 1 zeigt ein Soft-Cover-Airbagmodul in der Ausführung als Soft-Cover-Airbagseitenmodul 22 in zwei Ausführungen: eine Ausführung entsprechend der Variante Soft-Cover-Airbagseitenmodul 22-1 und eine andere Ausführung entsprechend der Variante Soft-Cover-Airbagseitenmodul 22-2. Bei der zweiten Variante ist das Soft-Cover-Airbagseitenmodul länger durch ein verlängertes Bauteil nach unten herausgezogen. Die Soft-Cover-Airbagseitenmodule 22 sind über ein Befestigungsmittel 24 mit der Tragstruktur 12 der Rückenlehne verbunden. Sichtbar ist zur Einordnung der Größenverhältnisse eine Öffnung 28 in der Tragstruktur 12 der Rückenlehne, in der ein Bedienelement für eine Lordosenverstelleinrichtung 26 angeordnet ist. Das Soft-Cover-Airbagseitenmodul 22 überdeckt im Wesentlichen circa ein mittleres Drittel in Bezug auf die Länge der Rückenlehne 10.

Gemäß der Vorderaußenansicht nach Figur 2 der Rückenlehne ist erkennbar, dass das Soft-Cover-Airbagseitenmodul zwischen der Tragstruktur 12 und dem Schaum eines Rückenlehnenpolsters angeordnet ist. Das Bedienelement der Lordosenverstelleinrichtung 26 schließt im unteren Bereich des Soft-Cover-Airbagseitenmoduls 22-1/22-2 bündig ab.

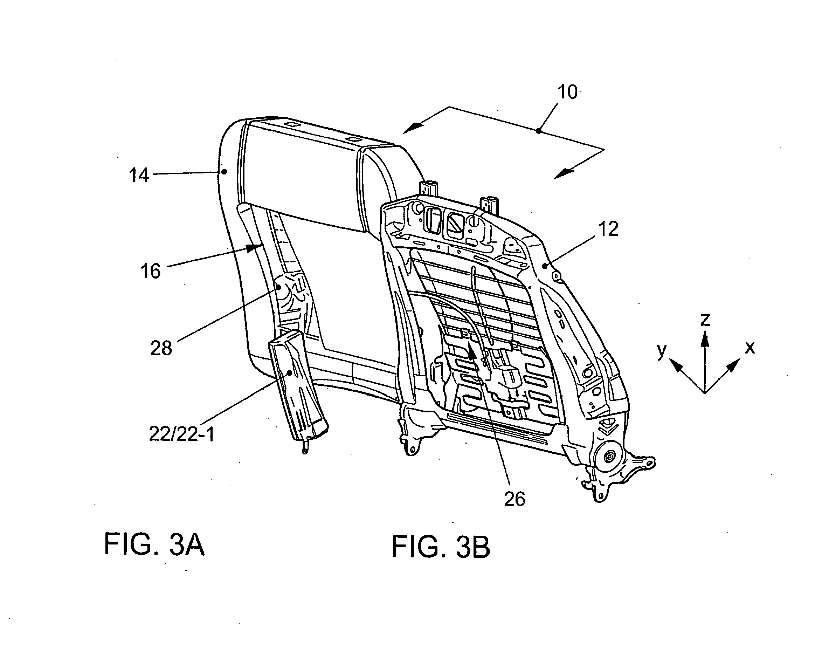

Figur 3 zeigt in einer perspektivischen Hinteransicht ein eröffnetes Schaumteil 14, welches die Tragstruktur 12 der Rückenlehne 10 umgibt, wobei das Soft-Cover-Airbagseitenmodul 22 herausgezogen dargestellt ist. In diesem Bereich des Schaumteiles 14 wird ein Bauraum 16 im Schaumteil 14 vorgesehen. Die Figur 3A zeigt zudem die vorgesehene Öffnung 28 für ein Bedienelement der Lordosenverstelleinrichtung 26, die in Figur 3B in der Tragstruktur 12 der Rückenlehne 10 befestigt dargestellt ist.

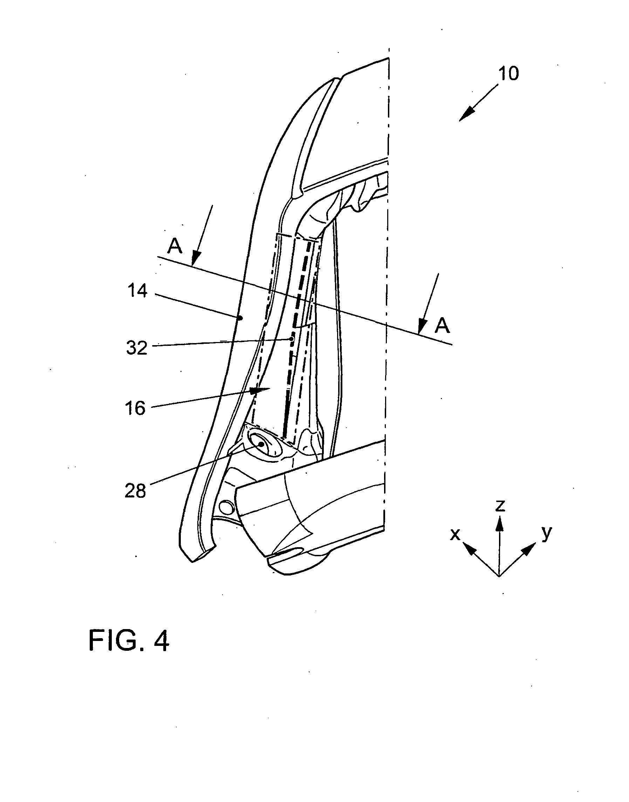

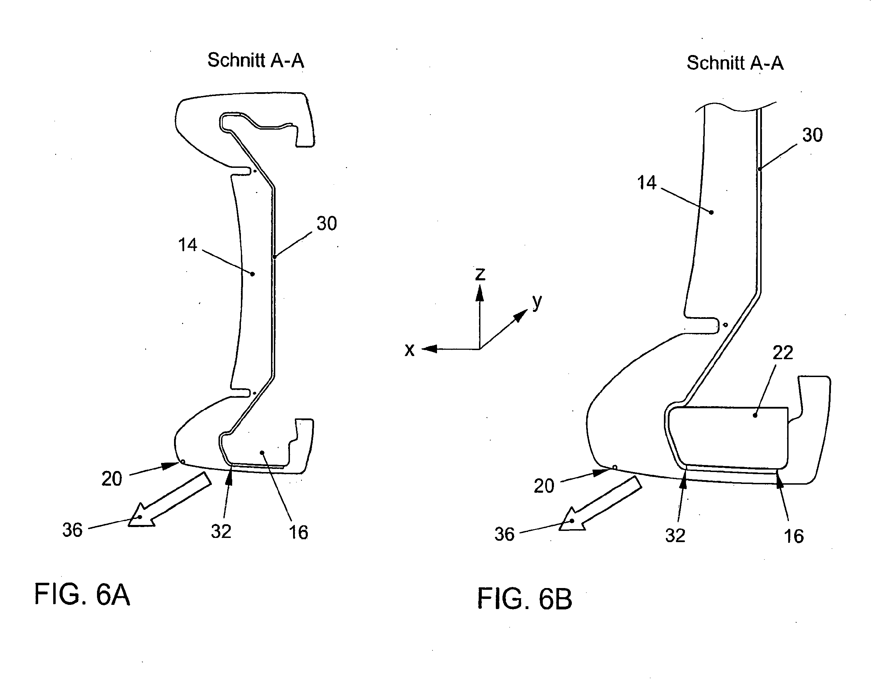

Figur 4 zeigt den Bauraum 16 in der eröffneten Rückenlehne 10 in einer schematischen perspektivischen Darstellung schräg von hinten. Die Lage der Schnittlinie A-A durch das Schaumteil 14 der Rückenlehne 10 ist ebenfalls gekennzeichnet, wobei der Schnitt A-A in den Figuren 6A, 6B detailliert zu sehen ist.

Insbesondere Figur 4 und 6B zeigt die Bauraumanforderung 16 des Soft-Cover-Airbagseitenmoduls 22 im Schaumteil 14.

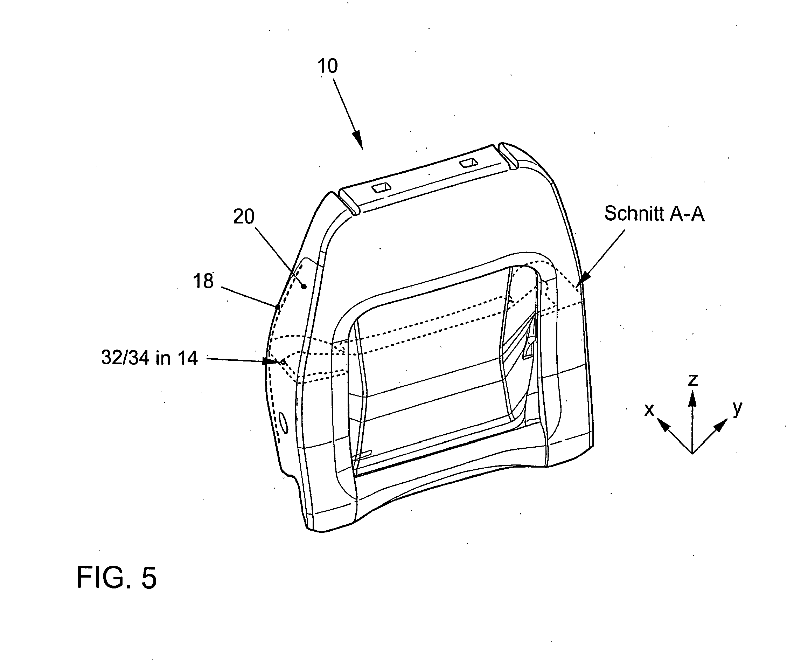

Die Lage der Schnittlinie A-A ist ebenfalls in Figur 5 dargestellt, wobei hier eine Rückenlehne 10 in einer perspektivischen Darstellung einer geschlossenen Rückenlehne 10 schräg von hinten zu sehen ist. In dieser Außenansicht ist dargestellt, dass das Schaumteil 14 der Rückenlehne 10 selbstverständlich von einem Bezug 18 umgeben ist, der im Bereich des Soft-Cover-Airbagseitenmoduls 22 eine Schwächung 20 aufweist.

Korrespondierend zu dieser Schwächung 20 oder zumindest in seiner Lage abgestimmt weist das Schaumteil 14 eine Perforierung 32 auf, die jedoch nicht in das Schaumteil 14 selbst eingebracht wird, sondern in einem Vlies oder einer vliesartigen Schicht 30 eingebracht wird. Die vliesartige Schicht 30 kann aufgeschäumt oder in anderer Art und Weise - beispielsweise durch Aufkleben oder dergleichen - auf das Schaumteil 14 aufgebracht werden.

Wie die Figuren 6A und 6B im Schnitt A-A zeigen ist das Vlies oder die vliesartige Schicht 30 auf der Rückseite des Schaumteiles angeordnet. Es besteht die Möglichkeit das Vlies oder die vliesartige Schicht 30 auf der gesamten hinteren Fläche des Schaumteiles 14 anzuordnen oder aber nur partiell im Bereich des Soft-Cover-Airbagseitenmodul 22 auf der seitlichen Innenseite des Schaumteiles 14 auszuführen.

Dargestellt ist die vollflächige Anordnung an der Rückseite des Schaumteiles 14, wobei das Vlies oder die vliesartige Schicht 30 bereits während des Ausschäumens des Schaumteiles 14 in das Schäumwerkzeug eingebracht werden kann, so dass sich ein kompaktes Schaumteil mit angeordnetem Vlies 14, 30 ergibt. Vorzugsweise wird das Vlies oder die vliesartige Schicht 30 bereits vor dem Einschäumen perforiert.

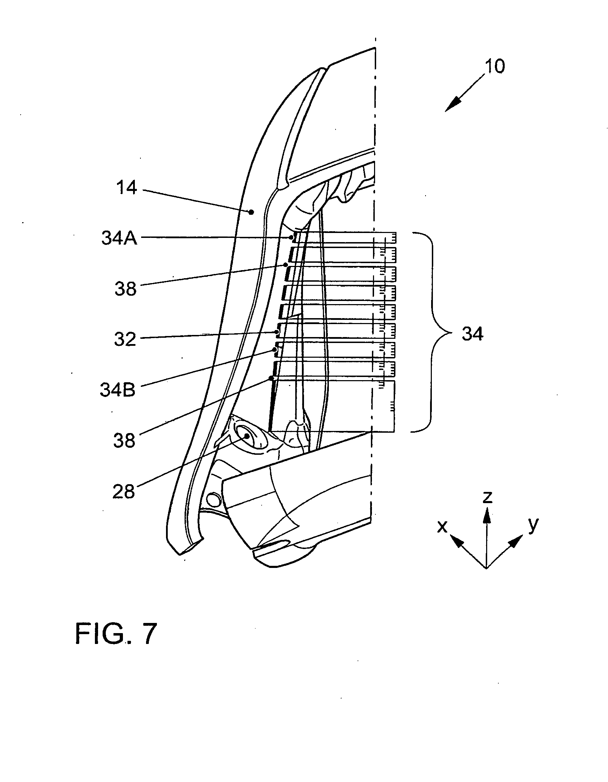

Der Verlauf der Perforation ergibt sich insbesondere aus den Figuren 6A, 6B und Figur 7.

Vorzugsweise wird die Perforierung 32 ferner im Übergangsbereich des Schaumteiles 14 von einer im Wesentlichen in x-Richtung verlaufenden Innenkontur in die im Wesentlichen in y-Richtung verlaufende Innenkontur des Schaumteiles 14 ausgeführt, so dass sich vorzugsweise eine Entfaltungsrichtung 36 schräg nach vorn in x-Richtung zwischen den Richtungen x, y zum seitlichen Schutz des eines Fahrzeuginsassen ausbildet. Selbstverständlich sind andere Entfaltungsrichtungen 36 denkbar.

Aus den Figur 6A, 6B in Verbindung mit Figur 5 wird ersichtlich, dass die Schwächung 20 beispielsweise durch eine Airbag-Naht im Bezug 18 ebenfalls in z-Richtung verlaufend in diesem Ausführungsbeispiel im Wesentlichen im vorderen Bereich des Seitenteiles der Rückenlehne 10 verläuft, in dem auch an der Innenseite des Schaumteiles 14 liegend die Perforierung 32 des Vlieses beziehungsweise der vliesartigen Schicht 30 vorgesehen ist.

Diese Lösung ermöglicht einen Durchschuss des Luftsackes des Soft-Cover-Airbagseitenmoduls 22 unter weitestgehender Vermeidung von sich beim Airbagschuss möglicherweise bildenden Schaumpartikeln. Die Schaumpartikel, die sich gegebenenfalls noch aus dem Schaum 14 lösen könnten, werden in vorteilhafter Weise durch das Vlies beziehungsweise die vliesartige Schicht 30 gebunden.

Figur 7 zeigt eine schematische perspektivische Darstellung einer eröffneten Rückenlehne 10 schräg von hinten mit Darstellung der Perforierung 32 der vliesartigem Schicht 30 selbst. Sie ist beispielsweise in der in Figur 6A und 6B beschriebenen Lage angeordnet und ist in Figur als Perforierung 32 in der Art einer Schlitzung 34 ausgeführt. Alle erdenklichen Formen und Ausführungen der Perforierungen 32 sind theoretisch denkbar.

Erfindungsgemäß wird also eine genau vorgeschriebene Anzahl von Schlitzen 34A, 34B eingebracht, die zuvor zu einer Art Schlitz- oder Lochmuster hinsichtlich eines bestimmten Abstandes 38 zueinander und jeweils mit einer vorbestimmten Länge ausgelegt worden sind.

Beispielhaft wird eine mögliche Ausgestaltung anhand der Figur 7 näher erläutert.

Es wird ein Schlitz- oder Lochmuster ausgebildet, bei dem die Länge der geschlitzten oder gelochten Bereiche der vliesartigen Schicht 30 - bei in z-Richtung (vertikal) verlaufender Perforierung 32 - von oben nach unten zunimmt. Die Abstände 38 hingegen zwischen den geschlitzten oder gelochten Bereichen der vliesartigen Schicht 30 nehmen - bei in z-Richtung (vertikal) verlaufender Perforierung 32 - von oben nach unten ab.

Hierdurch sind sichere Aufreißeigenschaften des Schaumteiles 14 sichergestellt und im Auslösefall wird durch die vliesartige Schicht 30 im Wesentlichen das Entstehen von einzelnen Schaumpartikeln vermieden.

Die Länge der kurzen Schlitze 34A beziehungsweise kurzen Lochungen der geschlitzten oder gelochten Bereiche im oberen Bereich der vliesartigen Schicht 30 beträgt vorzugsweise zwischen 10 bis 30 mm und die Länge der langen Schlitze 34A beziehungsweise der langen Lochungen im unteren Bereich der vliesartigen Schicht 30 beträgt 30 bis 50 mm.

Der Abstand 38 zwischen den geschlitzten oder gelochten Bereichen der vliesartigen Schicht 30 beträgt zwischen 2 bis 15 mm und nimmt von oben nach unten ab, wobei diese Ausgestaltung in Figur 7 nicht detailliert dargestellt ist.

Nicht dargestellt ist ferner, dass das Schaumteil 14 ebenfalls eine Schlitzung oder Anschlitzung aufweist, wobei die Lage der Schlitzung oder Anschlitzung mit der Perforierung 32 der vliesartigen Schicht 30 abgestimmt ist beziehungsweise korrespondiert, so dass die obige Beschreibung und Auslegung auch für eine Schlitzung beziehungsweise Perforierung des Schaumteiles 14 gilt .

Diese Maßnahmen bewirken jeweils einzeln und gemeinsam ein Austreten des Airbagmoduls von unten nach oben, da im unteren Bereich, der circa 2/3 der Gesamtlänge darstellt, die längeren Schlitze 34B beziehungsweise Lochungen mit geringeren Abständen 38 ausgeführt sind. Im oberen Bereich, der circa 1/3 der Gesamtlänge der Schlitzung 34 beziehungsweise Lochung darstellt, sind die Schlitze 34A kürzer und die Abstände 38 größer gewählt.

Die Länge der Schlitze 34 nimmt dabei von oben nach unten nicht unbedingt linear zu beziehungsweise die Abstände 38 nehmen nicht linear ab. Bevorzugt ist eine geringere Längenzunahme der Schlitzung beziehungsweise Lochung im oberen Bereich beziehungsweise eine stärke Reduzierung der Abstände 38 im oberen Bereich der Schlitzung beziehungsweise Lochung.

Das heißt im vorzugsweise unteren 2/3 Bereich der Schlitzung beziehungsweise Lochung nimmt die Länge der Schlitze beziehungsweise Lochungen stärker zu und die Abstände 38 zwischen den Schlitzen beziehungsweise Lochungen nehmen im unteren 2/3 Bereich nur wenig ab.

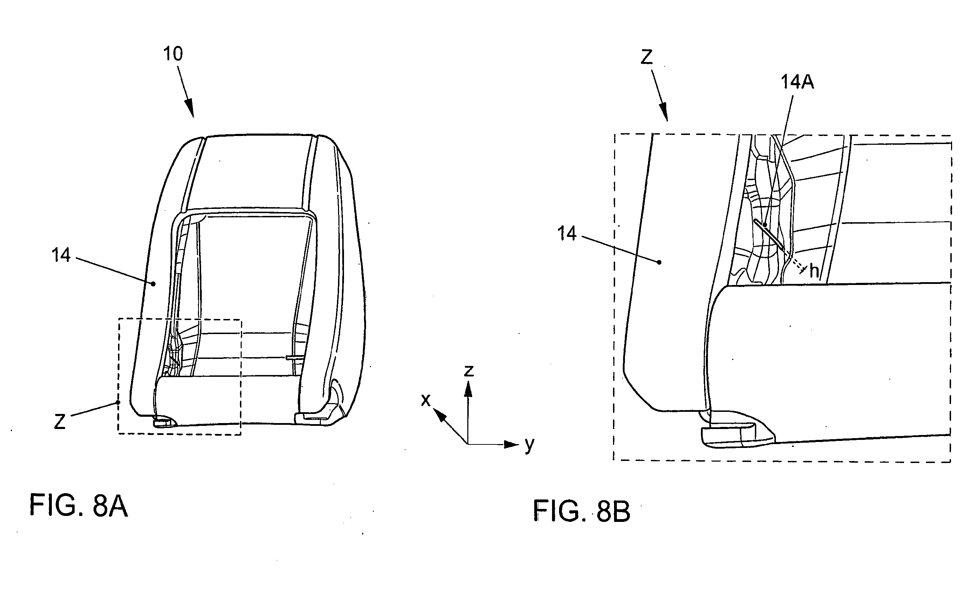

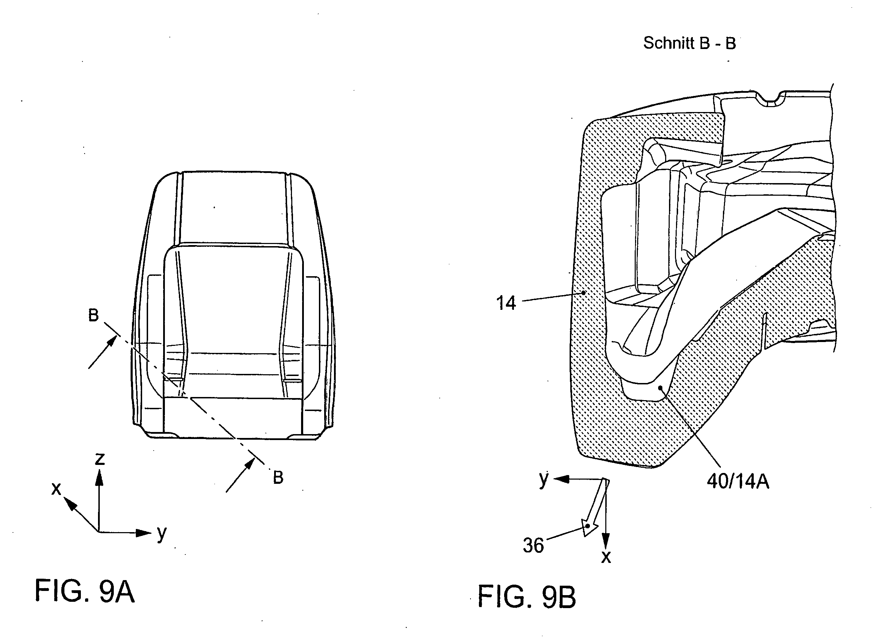

Trotz der dadurch bereits sehr guten und sicheren Aufreißeigenschaften des Schaumteiles 14 ist ohne das Entstehen von einzelnen Schaumpartikeln im Auslösefall zusätzlich in einer weiteren Ausgestaltung der Erfindung eine Schaumnut 14A von der Innenseite des Schaumteiles 14 her im Schaumteil 14 anordbar. Diese Schaumnut 14A ist in den Figuren 8A, 8B, 9A und 9B noch näher dargestellt und erzeugt an der Einbringstelle einen zusätzlichen Ausgangspunkt beziehungsweise Schwächungspunkt für ein gezieltes Aufreißen des Luftsackes des Airbagmoduls 22 an einer vorbestimmten Stelle beziehungsweise in einem vorbestimmten Bereich der Rückenlehne 10.

Die Schaumnut 14A ist halbmondartig in das Schaumteil 14 eingebracht und in einer vorgebbaren Richtung, je nach gewünschter Entfaltungsrichtung 36 insbesondere zum seitlichen Schutz eines Fahrzeuginsassen hin, in Richtung eines Hüftbereiches im Wesentlichen schräg nach vorn in x-Richtung zwischen den Richtungen x, y, ausgebildet beziehungsweise ausgerichtet.

Figur 8A zeigt in der Einzelheit Z den Bereich der Rückenlehne 10, der in Figur 8A vergrößert dargestellt ist.

Figur 8B zeigt die Lage der Schaumnut 14A im Schaumteil 14 in der Darstellung von hinten auf das Schaumteil 14 mit Blick in eine eröffnete Rückenlehne 10 hinein. Dabei kann die Schaumnut 14A in einer vorgebbaren Lage angeordnet werden. Im Ausführungsbeispiel ist sie gegenüber eine gedachten y-Ebene schräg verlaufend angeordnet. Diese Anordnung gewährleistet einen zu der gedachten y-Ebene in z-Richtung im äußeren Bereich der Rückenlehne 10 höheren Aufreißpunkt gegenüber einem im weiter innen liegenden Bereich der Rückenlehne 10 tieferen Aufreißpunkt.

Figur 9A verdeutlicht anhand der Schnittlinie B-B, die der Lage der schräg angeordneten Schaumnut 14A folgt, und der zugehörigen Schnittdarstellung nach Figur 9B die Ausführung der Schaumnut 14A. Diese stellt gemäß Figur 9B eine halbmondartige Aussparung/Ausnehmung 40 im Bereich des Schaumteiles 14 dar. Die Nuthöhe h beträgt beispielsweise circa 1,8 mm und ist selbstverständlich je nach Schaumdicke des Schaumteiles 14 nach Bedarf auch dicker oder dünner oder auch tiefer oder weniger tief in das Schaumteil 14 einbringbar.

## Patentansprüche

1. Airbagmodulanordnung, bei der an einer Fahrzeugkomponente, insbesondere einer Rückenlehne, ein Airbagmodul angeordnet ist, wobei das Airbagmodul im Wesentlichen einen Airbagträger, einen Airbagluftsack und einen Gasgenerator umfasst, die gemeinsam in einem Bauraum der Fahrzeugkomponente an einer Tragstruktur angebracht sind, aus dem der Airbagluftsack im Auslösefall austritt und anschließend mindestens eine über dem Airbagmodul angeordnete Materialschicht eröffnet und sich in einen Fahrgastraum oder dergleichen entfaltet, wobei
der Bauraum (16) des Airbagmoduls (22) von einem in Entfaltungsrichtung (36) geschlossenen Schaumteil (14) umgeben ist und im gewünschten Austrittsbereich des Airbagluftsacks des Airbagmoduls (22) aus dem Schaumteil (14) auf der Innenseite des Schaumteiles (14) eine vliesartige Schicht (30) angeordnet ist, die im gewünschten Austrittsbereichs des Airbagmoduls (22) eine vorgebbare Perforierung (32) aufweist, **dadurch gekennzeichnet, dass**,
die Perforierung (32) durch Schlitzung (34) oder Lochung der vliesartigen Schicht (30) nach einem vorgebbaren Schlitz- oder Lochmuster ausgebildet ist, bei dem die Länge der geschlitzten oder gelochten Bereiche der vliesartigen Schicht (30) - bei in z-Richtung, (vertikal) verlaufender Perforierung (32) - von oben nach unten -zunimmt.

2. Airbagmodulanordnung nach Anspruch 1,
**dadurch gekennzeichnet, dass**
das Airbagmodul ein Soft-Cover-Seitenairbagmodul (22) ist, dessen Luftsack im Wesentlichen durch ein Halteband an dem Airbagträger befestigt und im Bauraum vorgehalten ist. ,

3. Airbagmodulanordnung nach Anspruch 2,
**dadurch gekennzeichnet, dass**
das Soft-Cover Seitenairbagmodul (22) mittels des Airbagträgers an der Tragstruktur (12), insbesondere einem Rückenlehnenrahmen, befestigt ist.

4. Airbagmodulanordnung nach Anspruch 1,
**dadurch gekennzeichnet, dass**
die Perforierung (32) auf der Innenseite der vliesartigen Schicht (30) ausgeführt ist.

5. Airbagmodulanordnung nach Anspruch 1,
**dadurch gekennzeichnet, dass**
die vliesartige Schicht (30) an das Schaumteil (14) angeschäumt ist.

6. Airbagmodulanordnung nach Anspruch 1,
**dadurch gekennzeichnet, dass**
die Perforierung (32) in z-Richtung im Wesentlichen orthogonal zu der Entfaltungsrichtung (36) des Luftsackes des Airbagmoduls (22) verläuft.

7. Airbagmodulanordnung nach Anspruch 1,
**dadurch gekennzeichnet, dass**
ein Schlitz- oder Lochmuster ausgebildet ist, bei dem die Abstände (38) zwischen den geschlitzten oder gelochten Bereichen der vliesartigen Schicht (30) - bei in z-Richtung (vertikal) verlaufender Perforierung (32) - von oben nach unten - abnehmen.

8. Airbagmodulanordnung nach Anspruch 1,
**dadurch gekennzeichnet, dass**
die Länge der geschlitzten oder gelochten Bereiche der vliesartigen Schicht (30) zwischen 10 bis 20 mm - kurze Schlitze (34A) beziehungsweise kurze Lochungen - und 30 bis 50 mm - lange Schlitze (34A) beziehungsweise lange Lochungen - beträgt.

9. Airbagmodulanordnung nach Anspruch 7,
**dadurch gekennzeichnet, dass**
ein Abstand (38) zwischen den geschlitzten oder gelochten Bereichen der vliesartigen Schicht (30) zwischen 2 bis 15 mm beträgt.

10. Airbagmodulanordnung nach Anspruch 1,
**dadurch gekennzeichnet, dass**
ein das Schaumteil (14) umgebender Bezug (18) eine Schwächung (20) aufweist, wobei die Lage der Schwächung (20) mit der Perforierung (32) der vliesartigen Schicht abgestimmt ist beziehungsweise korrespondiert.

11. Airbagmodulanordnung nach Anspruch 1,
**dadurch gekennzeichnet, dass**
das Schaumteil (14) ebenfalls eine Schlitzung oder Anschlitzung aufweist, wobei die Lage der Schlitzung oder Anschlitzung mit der Perforierung (32) der vliesartigen Schicht (30) abgestimmt ist beziehungsweise korrespondiert.

12. Airbagmodulanordnung nach Anspruch 1,
**dadurch gekennzeichnet, dass**
die in z-Richtung verlaufende Perforierung (32) im Übergangsbereich des Schaumteiles (14) von einer im Wesentlichen in x-Richtung verlaufenden Innenkontur in die im Wesentlichen in y-Richtung verlaufende Innenkontur ausgeführt ist, so dass sich eine Entfaltungsrichtung (36) schräg nach vorn in x-Richtung zwischen den Richtungen x, y zum seitlichen Schutz eines Fahrzeuginsassen, insbesondere in Richtung eines Hüftbereiches eines Insassen, ausbildet.

13. Airbagmodulanordnung nach Anspruch 1,
**dadurch gekennzeichnet, dass**
die Vliesstärke der vliesartigen Schicht (30) circa. (280 +/- 50) g/m² beträgt.

14. Airbagmodulanordnung nach Anspruch 1,
**dadurch gekennzeichnet, dass**
die vliesartige Schicht (30) aus PET [Polyethylenterephthalat] oder PP [Polypropylen] ist.

15. Airbagmodulanordnung nach Anspruch 1,
**dadurch gekennzeichnet, dass** das Schaumteil (14) auf der Innenseite eine Schaumnut (14A) aufweist, die ein definiertes Aufreißen des Schaumteiles (14) beim Austritt des Luftsackes des Airbagmoduls (22) ermöglicht.

16. Airbagmodulanordnung nach Anspruch 15,
**dadurch gekennzeichnet, dass**
die Schaumnut (14A) in einer vorgebbaren Schaumnuthöhe (h) halbmondartig und hinsichtlich ihrer Tiefe, relativ zur Stärke des Schaumteiles (14) im Austrittsbereich des Airbagmoduls (22), in das Schaumteil (14) einbringbar und in einer vorgebbaren Richtung je nach gewünschter Entfaltungsrichtung (36) zum seitlichen Schutz eines Fahrzeuginsassen hin, insbesondere in Richtung eines Hüftbereiches, im Wesentlichen schräg nach vorn in x-Richtung, zwischen den Richtungen x, y, ausgerichtet ist.

## Claims

1. Airbag module arrangement, in which an airbag module is arranged on a vehicle component, in particular a backrest, wherein the airbag module essentially comprises an airbag carrier, an airbag air sack and a gas generator, which are jointly fitted to a supporting structure in a construction space of the vehicle component, from which the airbag air sack emerges when triggered and subsequently opens up at least one material layer arranged above the airbag module and is deployed into a passenger compartment or the like, wherein the construction space (16) of the airbag module (22) is surrounded by a foam part (14) which is closed in the direction of deployment (36) and, in the desired outlet region of the airbag air sack of the airbag module (22) from the foam part (14), a fleece-like layer (30) is arranged on the inside of the foam part (14), said fleece-like layer having a predeterminable perforation (32) in the desired outlet region of the airbag module (22), **characterized in that** the perforation (32) is formed by slitting (34) or perforating the fleece-like layer (30) according to a predeterminable pattern of slits or holes, in which the length of the slit or perforated regions of the fleece-like layer (30) increases from the top downwards in the case of a perforation (32) running (vertically) in the z direction.

2. Airbag module arrangement according to Claim 1, **characterized in that** the airbag module is a soft-cover side airbag module (22), the air sack of which is essentially fastened to the airbag carrier by a retaining strap and is put in front in the construction space.

3. Airbag module arrangement according to Claim 2, **characterized in that** the soft-cover side airbag module (22) is fastened to the supporting structure (12), in particular to a backrest frame, by means of the airbag carrier.

4. Airbag module arrangement according to Claim 1, **characterized in that** the perforation (32) is formed on the inside of the fleece-like layer (30).

5. Airbag module arrangement according to' Claim 1, **characterized in that** the fleece-like layer (30) is foamed onto the foam part (14).

6. Airbag module arrangement according to Claim 1, **characterized in that** the perforation (32) runs substantially orthogonally in the z direction to the direction of deployment (36) of the air sack of the airbag module (22).

7. Airbag module arrangement according to Claim 1, **characterized in that** a pattern of slits or holes is formed, in which the distances (38) between the slit or perforated regions of the fleece-like layer (30) decrease from the top downwards in the case of a perforation (32) running (vertically) in the z direction.

8. Airbag module arrangement according to Claim 1, **characterized in that** the length of the slit or perforated regions of the fleece-like layer (30) is from 10 to 20 mm - short slits (34A) or short perforations - and 30 to 50 mm - long slits (34A) or long perforations.

9. Airbag module arrangement according to Claim 7, **characterized in that** a distance (38) between the slit or perforated regions of the fleece-like layer (30) is from 2 to 15 mm.

10. Airbag module arrangement according to Claim 1, **characterized in that** a cover (18) surrounding the foam part (14) has a weakening (20), wherein the position of the weakening (20) is matched or corresponds to the perforation (32) of the fleece-like layer.

11. Airbag module arrangement according to Claim 1, **characterized in that** the foam part (14) likewise has a slitting or slot, wherein the position of the slitting or slot is matched or corresponds to the perforation (32) of the fleece-like layer (30).

12. Airbag module arrangement according to Claim 1, **characterized in that** the perforation (32) running in the z direction is formed in the transition region of the foam part (14) from an inner contour running substantially in the x direction into the inner contour running substantially in the y direction, and therefore a direction of deployment (36) obliquely forwards in the x direction is formed between the directions x, y for the lateral protection of a vehicle occupant, in particular in the direction of an occupants hip region.

13. Airbag module arrangement according to Claim 1, **characterized in that** the fleece strength of the fleece-like layer (30) is circa. (280 +/- 50) g/m².

14. Airbag module arrangement according to Claim 1, **characterized in that** the fleece-like layer (30) is made from PET [polyethyleneterephthalate] or PP [polypropylene].

15. Airbag module arrangement according to Claim 1, **characterized in that** the inside of the foam part (14) has a foam groove (14A) which permits defined tearing of the foam part (14) during the exit of the air sack of the airbag module (22).

16. Airbag module arrangement according to Claim 15, **characterized in that** the foam groove (14A) is introducible into' the foam part (14) at a predeterminable foam groove height (h) in a crescent-like manner and, with respect to the depth thereof, relative to the thickness of the foam part (14) in the outlet region of the airbag module (22) and, in a predeterminable direction, depending on the desired direction of deployment (36) for the lateral protection of a vehicle occupant, in particular in the direction of a hip region, is oriented substantially obliquely forwards in the x direction, between the directions x, y.

## Revendications

1. Agencement de module d'airbag dans lequel un module d'airbag est disposé au niveau d'un composant de véhicule, notamment d'un dossier, le module d'airbag comprenant pour l'essentiel un support d'airbag, un ballon d'air d'airbag et un générateur de gaz placés ensemble dans un espace d'installation du composant de véhicule au niveau d'une structure portante, hors duquel le ballon d'air d'airbag sort en cas de déclenchement puis ouvre au moins une couche de matière disposée au-dessus du module d'airbag et se déploie dans un habitacle ou son équivalent ;
l'espace d'installation (16) du module d'airbag (22) est entouré par une partie en mousse (14) fermée dans la direction de déploiement (36) et une couche de type non-tissé (30) est disposée dans la zone de sortie souhaitée du ballon d'air d'airbag du module d'airbag (22) hors de la partie en mousse (14), sur le côté intérieur de la partie en mousse (14), ladite couche comportant une perforation prédéfinissable (32) dans la zone de sortie souhaitée du module d'airbag (22) ; **caractérisé en ce que** :
la perforation (32) est réalisée par fendage (34) ou perçage de la couche de type non-tissé (30) selon un modèle de fente ou de trou prédéfinissable dans lequel la longueur des zones fendues ou trouées de la couche de type non-tissé (30) augmente - d'en haut vers le bas - en présence d'une perforation (32) s'étendant dans la direction z (verticalement).

2. Agencement de module d'airbag selon la revendication 1, **caractérisé en ce que** le module d'airbag est un module d'airbag latéral de type Soft Cover (22) dont le ballon d'air est fixé au support d'airbag pour l'essentiel au moyen d'un collier de maintien et est maintenu dans l'espace d'installation.

3. Agencement de module d'airbag selon la revendication 2, **caractérisé en ce que** le module d'airbag latéral de type Soft Cover (22) est fixé à la structure portante (12), notamment à un cadre de dossier, à l'aide du support d'airbag.

4. Agencement de module d'airbag selon la revendication 1, **caractérisé en ce que** la perforation (32) est réalisée sur le côté intérieur de la couche de type non-tissé (30).

5. Agencement de module d'airbag selon la revendication 1, **caractérisé en ce que** la couche de type non-tissé (30) est déposée par moussage contre la partie en mousse (14).

6. Agencement de module d'airbag selon la revendication 1, **caractérisé en ce que** la perforation (32) s'étend dans la direction z pour l'essentiel perpendiculairement à la direction de déploiement (36) du ballon d'air du module d'airbag (22).

7. Agencement de module d'airbag selon la revendication 1, **caractérisé en ce qu'**un modèle de fente ou de trou est réalisé dans lequel les distances (38) entre les zones fendues ou trouées de la couche de type non-tissé (30) diminuent - de haut en bas - en présence d'une perforation (32) s'étendant dans la direction z (verticalement).

8. Agencement de module d'airbag selon la revendication 1, **caractérisé en ce que** la longueur des zones fendues ou trouées de la couche de type non-tissé (30) est comprise entre 10 à 20 mm - pour les fentes courtes (34A) et/ou les perçages courts - et 30 à 50 mm - pour les fentes longues (34A) et/ou les perçages longs.

9. Agencement de module d'airbag selon la revendication 7, **caractérisé en ce qu'**une distance (38) entre les zones fendues ou trouées de la couche de type non-tissé (30) est comprise entre 2 à 15 mm.

10. Agencement de module d'airbag selon la revendication 1, **caractérisé en ce qu'**un revêtement (18) entourant la partie en mousse (14) comporte une fragilisation (20), la position de la fragilisation (20) la perforation (32) de la couche de type non-tissé.

11. Agencement de module d'airbag selon la revendication 1, **caractérisé en ce que** la partie en mousse (14) comporte également un fendage ou un pourfendage, la position du fendage ou du pourfendage coïncidant avec et/ou correspondant à la perforation (32) de la couche de type non-tissé (30).

12. Agencement de module d'airbag selon la revendication 1, **caractérisé en ce que** la perforation (32) s'étendant dans la direction z est réalisée dans la zone de transition de la partie en mousse (14) en partant d'un contour intérieur s'étendant pour l'essentiel dans la direction x dans le contour intérieur s'étendant pour l'essentiel dans la direction y, de sorte qu'une direction de déploiement (36) s'étend de façon oblique vers l'avant dans la direction x entre les directions x, y pour réaliser la protection latérale d'un passager du véhicule, notamment en direction d'une zone de hanche d'un passager.

13. Agencement de module d'airbag selon la revendication 1, **caractérisé en ce que** l'épaisseur du non-tissé de la couche de type non-tissé (30) est approximativement de (280 +/- 50) g/m².

14. Agencement de module d'airbag selon la revendication 1, **caractérisé en ce que** la couche de type non-tissé (30) est en PET [téréphtalate de polyéthylène] ou en PP [polypropylène].

15. Agencement de module d'airbag selon la revendication 1, **caractérisé en ce que** là partie en mousse (14) comporte sur le côté intérieur une rainure en mousse (14A) permettant une libération définie de la partie en mousse (14) en cas de sortie du ballon d'air du module d'airbag (22).

16. Agencement de module' d'airbag selon la revendication 15, **caractérisé en ce que** la rainure en mousse (14A) peut être amenée dans la zone de sortie du module d'airbag (22), dans la partie en mousse (14), dans une hauteur de rainure en mousse (h), prédéfinissable de type demi-lune et par rapport à sa profondeur, par rapport à l'épaisseur de la partie en mousse (14) et être orientée dans une direction prédéfinissable respectivement vers la direction de déploiement (36) souhaitée pour réaliser la protection latérale d'un passager du véhicule, notamment en direction d'une zone de hanche, pour l'essentiel de façon oblique vers l'avant dans la direction x, entre les directions x, y.
